Europäisches Patentamt

European Patent Office

Office européen des brevets

(19)

(11) EP 0 648 891 B1

# (12) FASCICULE DE BREVET EUROPEEN

(45) Date de publication et mention
de la délivrance du brevet:
**07.01.1999 Bulletin 1999/01**

(51) Int Cl.⁶: **C21D 7/10**, C21D 8/06,
B60C 9/20

(21) Numéro de dépôt: **94115799.2**

(22) Date de dépôt: **07.10.1994**

(54) **Fil en acier inoxydable pour carcasse d'enveloppe de pneumatique**

Rostfreier Stahlfaden für Luftreifenkarkasse

Stainless steel wire for pneumatic tyre carcass

(84) Etats contractants désignés:
**AT BE CH DE DK ES FR GB IE IT LI LU NL SE**

(30) Priorité: **15.10.1993 FR 9312528**

(43) Date de publication de la demande:
**19.04.1995 Bulletin 1995/16**

(73) Titulaire: **COMPAGNIE GENERALE DES
ETABLISSEMENTS MICHELIN - MICHELIN & CIE
63040 Clermont-Ferrand Cédex (FR)**

(72) Inventeurs:
• **Arnaud, Jean-Claude
F-63830 Durtol (FR)**

• **Depraetere, Eric
F-63260 Thuret (FR)**
• **Lamoureux, Christian
F-63800 Cournon (FR)**

(74) Mandataire: **Hiebel, Robert
Michelin & Cie,
Service SGD/LG/PI Ladoux
63040 Clermont-Ferrand Cedex 01 (FR)**

(56) Documents cités:
EP-A- 0 429 094    EP-A- 0 489 159
WO-A-91/14811    WO-A-92/14811
FR-A- 2 096 405    FR-A- 2 173 628
US-A- 4 960 473

## Description

L'invention concerne les enveloppes de pneumatiques renforcées avec des fils métalliques. L'invention concerne en particulier les enveloppes de pneumatiques renforcées avec des fils en acier inoxydable.

La demande de brevet FR-A-2 096 405 décrit une enveloppe de pneumatique qui comporte une couche de renforcement disposée entre les couches de la carcasse et la bande de roulement en caoutchouc, la surface radialement extérieure de cette couche étant renforcée par des câbles métalliques d'acier inoxydable. Aucune mention d'utilisation d'acier inoxydable dans la carcasse des pneumatiques n'est faite dans cette demande dont le but est de prévenir la corrosion des câbles en acier situés dans le sommet des enveloppes de pneumatiques, cette corrosion étant due à l'humidité qui atteint les câbles à travers les fissures et les coupures du caoutchouc provoquées par un vieillissement ou un passage sur des clous.

La demanderesse a constaté de façon inattendue que l'on pouvait observer une diminution de l'endurance des câbles en acier dans les nappes carcasses des enveloppes de pneumatiques, par suite de phénomènes de fatigue et d'usure provoqués par la présence d'eau dans les zones de la carcasse, et ceci même en l'absence de coupures et de fissures du caoutchouc. L'eau responsable de cette altération des propriétés des câbles pénètre probablement dans les zones de la carcasse, en provenance de l'extérieur, par migration à travers le caoutchouc, par exemple depuis le gaz de gonflage, ou elle se trouvait déjà initialement à l'intérieur de l'enveloppe, par suite d'une teneur en humidité notable des gommes utilisées ou par suite de la cuisson. Enfin, cette eau peut probablement aussi provenir d'une incorporation de l'air ambiant dans les gommes, lors du calandrage des câbles.

Le but de l'invention est de remédier à ces inconvénients ou de les atténuer dans une large mesure.

En conséquence, l'invention concerne un fil d'acier conforme à la revendication 1.

L'invention concerne également les assemblages destinés à être utilisés dans les carcasses de pneumatiques, ces assemblages comportant au moins un fil conforme à l'invention.

L'invention concerne également les carcasses d'enveloppes de pneumatiques comportant au moins un fil ou un assemblage conformes à l'invention.

L'invention concerne également les enveloppes de pneumatiques comportant au moins une carcasse conforme à l'invention.

L'invention concerne également un procédé pour préparer le fil conforme à l'invention, ce procédé étant caractérisé par les points suivants :

a) on part d'un fil en acier inoxydable dont le diamètre est au moins égal à 0,3 mm et au plus égal à 3 mm; l'acier du fil comporte au moins 0,02 % et au plus 0,2 % de carbone, au moins 3 % et au plus 20 % de nickel, au moins 12 % et au plus 28 % de chrome, la somme du nickel et du chrome étant au moins égale à 20 % et au plus égale à 35 %, tous les % étant en poids; la structure de cet acier est entièrement austénitique ou pratiquement austénitique ;

b) on effectue au moins un traitement d'écrouissage, sans traitement thermique, le taux d'écrouissage total étant au moins égal à 1,5.

## I. Définitions et tests

### 1. Mesures dynamométriques

Les mesures de résistance à la rupture et d'allongement après rupture sont effectuées en traction selon la méthode
AFNOR NF A 03-151 de juin 1978.

### 2. Ecrouissage

Par définition, le taux de déformation $\varepsilon$ d'un écrouissage est donné par la formule :

$$\varepsilon = \mathrm{Ln}\ (S_0/S_f)$$

Ln étant le logarithme népérien, $S_0$ étant la section initiale du fil avant cet écrouissage et $S_f$ étant la section du fil après cet écrouissage.

### 3. Ductilité en torsion

Par définition, la ductilité en torsion d'un fil est le nombre de tours de torsion sur lui-même que le fil peut supporter. Cette mesure est réalisée sur une longueur de fil égale à 500 fois le diamètre. On maintient une extrémité de ce fil dans une mâchoire fixe, et on maintient l'autre extrémité dans une mâchoire rotative que l'on fait tourner de telle sorte que l'axe de rotation soit le même que l'axe du fil, la tension lors de cette torsion étant égale à 5 % de la force de rupture en traction du fil mesurée avant torsion, et on compte le nombre de tours nécessaires pour provoquer la rupture du fil.

### 4. Structure des aciers

L'identification et la quantification de la structure des aciers sont effectuées de la façon suivante.

On utilise une méthode par diffraction des rayons X. La méthode utilisée consiste à déterminer l'intensité diffractée totale pour chacune des phases de l'acier, en particulier la martensite $\alpha'$, la martensite $\varepsilon$ et l'austénite gamma, en sommant l'intensité intégrée de tous les pics de diffraction de cette phase, ce qui permet de calculer les pourcentages de chacune des phases par rapport à l'ensemble de toutes les phases de l'acier.

Les spectres de diffraction aux rayons X sont déterminés sur la section du fil à étudier avec un goniomètre, à l'aide d'une anticathode de chrome.

Un balayage permet d'obtenir les raies caractéristiques de chacune des phases présentes. Dans le cas des trois phases précitées (les deux martensites et l'austénite), le balayage est de 50 degrés à 160 degrés. Pour déterminer les intensités intégrées des pics, il est nécessaire de déconvoluer les raies qui interfèrent.

On a la relation suivante pour chaque pic d'une phase quelconque :

$$I_{int} = (L_{mh} \times I_{max})/P$$

avec :

$I_{int} = $ l'intensité intégrée du pic
$L_{mh} = $ la largeur à mi-hauteur du pic (en degrés)
$I_{max} = $ l'intensité du pic (en coups par seconde)
$P = $ le pas de mesure du pic (0,05 degré).

On a par exemple les raies caractéristiques suivantes :

| austénite gamma | raie (111) 2θ = 66,8 |
| | raie (200) 2θ = 79,0 |
| | raie (220) 2θ = 128,7 |
| martensite α' | raie (110) 2θ = 68,8 |
| | raie (200) 2θ = 106 |
| | raie (211) 2θ = 156,1 |
| martensite ε | raie (100) 2θ = 65,4 |
| | raie (002) 2θ = 71,1 |
| | raie (101) 2θ = 76,9 |
| | raie (102) 2θ = 105,3 |
| | raie (110) 2θ = 136,2 |

Les structures cristallographiques des phases précédentes sont les suivantes :

austénite gamma : cubique à faces centrées
martensite α' : cubique centrée ou quadratique centrée
martensite ε : hexagonale compacte.

On peut alors calculer le pourcentage en volume d'une phase quelconque "i", par la relation suivante :

$$\text{\% de la phase "i"} = I_i/I_t$$

avec

$I_i = $ somme des intensités intégrées de tous les pics de cette phase "i"
$I_t = $ somme des intensités intégrées de tous les pics de toutes les phases de diffraction de l'acier.

On a donc en particulier :

% de martensite α' = $I_{\alpha'}/I_t$
% de martensite ε = $I_\varepsilon/I_t$
% total de martensite = $(I_{\alpha'} + I_\varepsilon)/I_t$
% d'austénite gamma = $I_{gamma}/I_t$

avec :

$I_{\alpha'} = $ intensité intégrée de tous les pics de la martensite α'
$I_\varepsilon = $ intensité intégrée de tous les pics de la martensite ε
$I_{gamma} = $ intensité intégrée de tous les pics de l'austénite gamma.

Dans ce qui suit, les divers % concernant les phases de la structure de l'acier sont exprimés en volume et les termes "martensite" ou "phase martensite" couvrent l'ensemble des phases martensite α' et martensite ε, le terme % en martensite représentant donc le % en volume du total de ces deux phases martensitiques et le terme "austénite" représente l'austénite gamma.
Les % en volume des diverses phases déterminés par la méthode précédente sont obtenus avec une précision d'environ 5 %.

D'une façon générale on a la relation suivante :

$$f_i^m = \frac{d_i \times f_i^v}{\sum_{j=1}^{j=n} d_j \times f_j^v}$$

avec les significations suivantes :

l'indice "i" correspond à la phase "i"
l'indice "j" correspond à la phase "j"
$f_i^m$ est la fraction massique de la phase "i"
$f_i^v$ est la fraction volumique de la phase "i"
$f_j^v$ est la fraction volumique de la phase "j"
$d_i$ est la densité de la phase "i" calculée à partir de sa structure cristallographique
$d_j$ est la densité de la phase "j" calculée à partir de sa structure cristallographique
$n$ est le nombre total de phases.

On a donc :

$$100 \times f_i^v = \% \text{ volume de la phase "i"}$$

$$100 \times f_i^m = \% \text{ en poids de la phase "i"}.$$

Dans le cas des aciers inoxydables conformes à l'invention, les densités des phases principales (martensite et austénite) ont des valeurs très voisines (écart maximum d'environ 3 %) de telle sorte que les % en poids sont très voisins des % en volume.

II Exemples

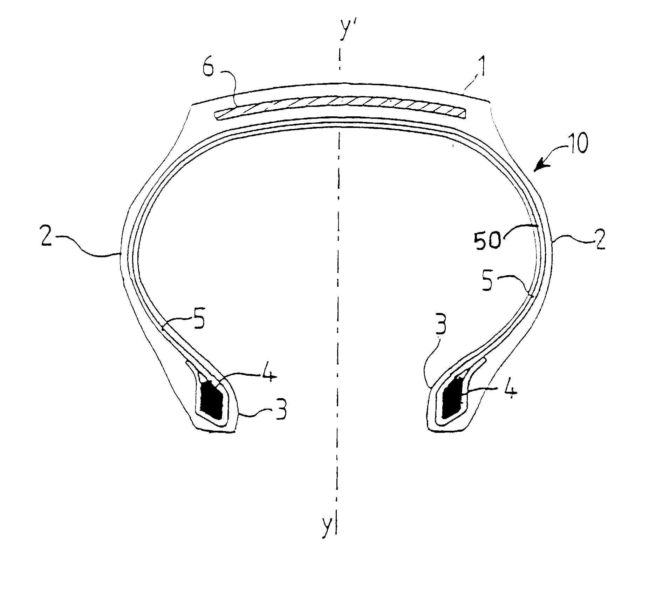

L'invention sera aisément comprise à l'aide des exemples non limitatifs qui suivent en faisant le cas échéant référence à la figure unique du dessin qui représente de façon schématique en coupe radiale une enveloppe de pneumatique conforme à l'invention.

Dans ces exemples on utilise des fils conformes à l'invention dénommés "fil 1" et "fil 2".

Dans ces exemples, tous les % indiqués sont en poids, sauf indication différente.

Fil 1

Pour préparer ce fil 1, on utilise un fil d'acier inoxydable dont les caractéristiques sont les suivantes :

structure pratiquement entièrement austénitique, c'est à dire que le % de martensite est pratiquement nul, à savoir inférieur à 5 % en volume ;
diamètre : 0,5 mm ;
composition (% en poids) : C = 0,096 ; Cr = 17,6 ; Ni = 7,7 ; Mo = 0,7; Mn = 1,3; Si = 2,0; Cu = 0,2; N = 0,04 ; S = 0,001; P = 0,019 ; le reste étant constitué de fer avec les impuretés inévitables habituelles.

Ce fil d'acier est recouvert d'une couche de nickel de 1,3 micromètre.

Ce fil ainsi revêtu de nickel a une résistance à la rupture de 900 MPa et un allongement après rupture de 60 %.

On effectue sur ce fil revêtu de nickel un dépôt de cuivre puis un dépôt de zinc, par voie électrolytique à la température ambiante et on chauffe ensuite thermiquement par effet joule à 540°C pour obtenir du laiton par diffusion du cuivre et du zinc, le rapport pondéral (phase $\alpha$)/(phase $\alpha$ + phase $\beta$) étant égal à 0,85 les phases $\alpha$ et $\beta$ étant les phases du laiton.

On effectue alors sur ce fil un tréfilage à froid en milieu humide avec une graisse qui se présente de façon connue sous forme d'une émulsion dans de l'eau. Ce tréfilage est effectué en plusieurs fois, le taux de déformation total $\varepsilon$ obtenu par cet écrouissage étant de 2,04.

Aucun traitement thermique n'est effectué sur le fil après l'obtention du revêtement de laiton.

Le fil obtenu a un diamètre de 0,18 mm, le revêtement de nickel et de laiton qui l'entoure a une épaisseur très faible, inférieure au micromètre, ce qui est négligeable par rapport au diamètre du fil d'acier.

Les caractéristiques du fil obtenu sont les suivantes :

Structure de l'acier : phase martensitique pratiquement égale à 57 % en volume, cette phase étant pratiquement uniquement de la martensite $\alpha'$, la phase d'austénite étant pratiquement de 43 % en volume.
Résistance à la rupture : 2500 MPa.
Allongement après rupture : 1 %.
Ductilité en torsion : 70 tours.

Bien entendu, la composition de l'acier du fil en ses éléments (par exemple carbone, chrome, nickel) est la même que celle du fil de départ.

Lors du procédé de fabrication du fil, le revêtement de nickel permet un bon accrochage du revêtement de laiton sur l'acier, et le revêtement de laiton facilite l'écrouissage du fil, ainsi que le collage du fil avec le caoutchouc lors de l'utilisation du fil dans du caoutchouc.

Fil 2

On utilise le même fil de départ, avec revêtement de nickel, que pour le fil 1, à la différence que son diamètre est de 0,8 mm.

On réalise les mêmes opérations que pour le fil 1 mais de telle sorte que le taux de déformation total $\varepsilon$ de l'écrouissage soit pratiquement égal à 3.

Le fil obtenu a un diamètre de 0,18 mm, ici encore l'épaisseur du revêtement de nickel et de laiton ayant une épaisseur négligeable par rapport à ce diamètre.

Le fil obtenu a les caractéristiques suivantes :

Structure de l'acier : phase martensitique pratiquement égale à 85 % en volume, cette phase étant pratiquement entièrement constituée de martensite $\alpha'$, la phase d'austénite étant pratiquement de 15 % en volume ;
résistance à la rupture : 2865 MPa ;
allongement après rupture : 1 % ;
ductilité en torsion : 170 tours.
Bien entendu, la composition de l'acier du fil en ses éléments (par exemple carbone, chrome, nickel) est la même que celle du fil de départ.

Exemple 1

Le but de cet exemple est d'évaluer les performances d'un fil conforme à l'invention grâce à un essai sur courroie.

On réalise des assemblages de formule (1 + 6 + 12) constitués chacun d'une âme, formée par un fil unique, entourée d'une couche de 6 fils cette couche intermédiaire étant elle-même entourée d'une couche extérieure de 12 fils, ces assemblages étant dépourvus de frette. Tous les fils des assemblages sont conformes au fil 1 et ils sont donc conformes à l'invention, de même que ces assemblages. L'âme de chaque assemblage est pratiquement dépourvue de torsion et les deux couches qui l'entourent ont le même pas, égal à 10 mm, et le même sens d'enroulage. La force à la rupture de chaque assemblage est de 1150 N.

On réalise d'autre part des assemblages témoins connus ayant chacun la même structure (1 + 6 + 12) que les assemblages conformes à l'invention, mais dont les fils sont des fils connus de diamètre 0,18 mm en acier perlitique écroui non inoxydable, comportant 0,7 % en poids de carbone, ces fils ayant chacun une résistance à la rupture de 2670 MPa, un allongement après rupture de 1 % et une ductilité en torsion de 200 tours, la force à la rupture de chaque assemblage étant de 1255 N.

Les assemblages conformes à l'invention d'une part et les assemblages témoins d'autre part sont incorporés dans des courroies sans fin réalisées chacune avec un mélange connu à base de caoutchouc semblable à ceux qui sont couramment utilisés pour les carcasses de pneumatiques. L'axe de chaque assemblage est orienté selon la direction longitudinale de la courroie dans laquelle il est incorporé. On obtient donc deux courroies identiques, à l'exception des assemblages de renfort qui s'y trouvent, l'une étant renforcée par les assemblages conformes à l'invention et l'autre étant renforcée par les assemblages témoins.

Dans chaque courroie, les assemblages sont séparés des faces de celle-ci par une épaisseur de gomme qui est d'environ 1 mm.

On fait subir à ces deux courroies les mêmes sollicitations de la façon suivante. On fait tourner chaque courroie autour de deux galets, de telle sorte que chaque portion élémentaire de chaque assemblage soit soumise à une tension de 138 N et subisse des cycles de variation de courbure qui la font passer d'un rayon de courbure infini à un rayon de courbure de 40 mm, et ceci pendant $50 \times 10^6$ cycles.

Lors de l'essai, la température et l'humidité de l'air au contact des courroies sont les mêmes pour ces courroies et sont celles de l'air ambiant, soit environ 20°C et environ 50 % d'humidité relative. La durée des sollicitations de chaque courroie est de l'ordre de 3 semaines.

A la fin de ces sollicitations, on extrait de la même façon les assemblages des courroies par décorticage, on mesure la force de rupture de chaque fil de ces assemblages et on fait une moyenne d'une part pour les assemblages conformes à l'invention et d'autre part pour les assemblages témoins.

On réalise d'autre part deux courroies identiques aux précédentes, l'une renforcée avec les assemblages de l'invention, l'autre avec les assemblages témoins, et on décortique de la même façon que précédemment ces courroies, mais cette fois sans les soumettre au préalable à des sollicitations, et on mesure la force de rupture de chaque fil de ces assemblages en faisant des moyennes comme précédemment. Cette valeur moyenne de force de rupture pour les fils conformes à l'invention et cette valeur moyenne de force de rupture pour les fils connus servent ainsi de valeurs témoins, puisque les fils correspondants n'ont pas été soumis à des sollicitations.

On constate que la réduction de la moyenne de la force à la rupture des fils après sollicitation, par rapport à la moyenne de la force à la rupture des fils n'ayant pas subi de sollicitation (valeurs témoins) est la suivante :

- moins de 3 % pour les fils conformes à l'invention;
- 15 % pour les fils connus perlitiques écrouis.

On constate donc que les fils conformes à l'invention permettent de diminuer très notablement la réduction de la force à la rupture des fils.

Cette réduction de la force à la rupture est due à l'usure des fils causée par l'action conjointe des sollicitations et de l'eau provenant de l'air ambiant, ces conditions étant comparables à celles auxquelles sont soumis les fils de renfort dans des carcasses d'enveloppes de pneumatiques.

Exemple 2

Le but de cet exemple est de déterminer les performances d'un fil conforme à l'invention quand il est utilisé dans une enveloppe de pneumatique.

On réalise des assemblages conformes à l'invention de type
(3 + 9)18, avec des fils identiques au fil 2.
Ces assemblages sont des câbles à couches constitués chacun d'une âme de trois fils tordus ensemble avec un pas d'environ 6,3 mm, entourée d'une couche de 9 fils enroulés avec un pas d'environ 12,6 mm, les sens d'enroulement étant les mêmes pour l'âme et pour la couche externe, cet assemblage étant dépourvu de frette.

La force à la rupture de chacun de ces assemblages est égale à 820 N.

On réalise d'autre part des assemblages connus ayant la même formule que les assemblages conformes à l'invention,
(3 + 9)18, mais dont les fils sont des fils connus de diamètre 0,18 mm en acier perlitique écroui non inoxydable comportant 0,7 % de carbone, ces fils, qui sont laitonnés de la même façon que les fils conformes à l'invention, ayant chacun une résistance à la rupture de 2670 MPa, un allongement après rupture de 1 % et une ductilité en torsion de 200 tours.

Chacun de ces assemblages connus a une force à la rupture égale à 770 N.

On réalise deux enveloppes de pneumatiques de dimension 215/75 R 17,5, l'une comportant une carcasse radiale réalisée avec les assemblages conformes à l'invention, l'autre comportant une carcasse radiale réalisée avec les assemblages connus, ces enveloppes ne différant que par la nature des assemblages utilisés dans les carcasses, l'enveloppe dont la carcasse est réalisée, de façon connue, avec les assemblages connus servant d'enveloppe témoin.

La figure unique représente schématiquement l'enveloppe conforme à l'invention. Cette enveloppe 10 comporte un sommet 1, deux flancs 2, deux bourrelets 3 renforcés chacun de façon connue par une tringle 4. Une carcasse radiale 5 est disposée d'un bourrelet 3 à l'autre en s'enroulant autour des tringles 4. Cette carcasse 5 est constituée d'une nappe unique formée par les assemblages 50 conformes à l'invention. Le sommet 1 est renforcé de façon connue par une armature 6. La ligne yy' représente le plan perpendiculaire à l'axe de rotation de l'enveloppe et passant par le milieu du sommet 1 (plan équatorial), le plan de la figure passant par cet axe de rotation (non représenté sur la figure) et étant donc perpendiculaire au plan équatorial.

L'armature 6 comporte, de façon connue, deux nappes de travail, une nappe de triangulation, et, au-dessus de ces nappes, une nappe de protection, toutes ces nappes, qui ne sont pas représentées sur le dessin dans un but de simplification, étant renforcées par des assemblages d'acier connus.

Dans chaque nappe de départ servant à réaliser une carcasse, la distance entre les axes de deux assemblages voisins quelconques est de 1,4 mm, avant conformation de l'enveloppe.

On monte ces enveloppes sur des jantes connues identiques (non représentées sur la figure) et on les gonfle toutes les deux à une pression de 10,8 bars, chaque enveloppe contenant 2 litres d'eau et l'atmosphère de ces enveloppes contenant 29 % d'oxygène (air enrichi en oxygène).

Chacune de ces enveloppes est soumise à une charge de 2700 daN et on la fait rouler à 50 km/h sur un volant ayant une circonférence de 8,5 m.

L'enveloppe témoin présente des ruptures des assemblages de la nappe carcasse en zone basse par suite d'un phénomène de fretting-fatigue au bout de 105 000 km, l'enveloppe devenant ainsi inutilisable.

L'enveloppe conforme à l'invention roule sans aucun dommage, et donc sans rupture des assemblages de la nappe carcasse, jusqu'à 170 000 km.

L'invention permet donc d'augmenter le kilométrage de plus de 60 %.

On constate en outre, sur les enveloppes ayant subi ce test, que les assemblages conformes à l'invention ne présentent que très peu d'usure (environ 4 % dans la zone basse et environ 6 à 7 % dans la zone des épaules), alors que les assemblages connus présentent localement une usure considérable, supérieure à 20 % dans ces deux zones.

L'invention permet donc d'augmenter très notablement la résistance à la fatigue et à l'usure des fils d'acier pour carcasses d'enveloppes de pneumatiques, et donc les enveloppes conformes à l'invention qui comportent ces fils se caractérisent par une durée de vie notablement allongée, ces enveloppes étant notamment des enveloppes pour véhicules poids lourds.

La composition et la structure particulières de l'acier inoxydable utilisé pour réaliser le fil conforme à l'invention permettent d'obtenir un fil fin par écrouissage. Lors de l'écrouissage, l'austénite se transforme progressivement en martensite ce qui permet d'obtenir une bonne résistance à la rupture en traction pour le fil terminé conforme à l'invention. Si la somme des teneurs en nickel et en chrome est supérieure à celle revendiquée, on retarde ou on empêche l'apparition de la phase de martensite lors de l'écrouissage et la résistance mécanique du fil terminé est insuffisante. Par contre, si la somme des teneurs en nickel et en chrome est inférieure à celle revendiquée, la phase de martensite est présente avant l'écrouissage ou elle apparaît trop tôt lors de l'écrouissage et il est impossible d'obtenir des fils fins. Enfin le taux d'écrouissage revendiqué permet une bonne ductilité en torsion et donc garantit une utilisation possible du fil pour réaliser des assemblages.

Les procédés et dispositifs pour réaliser ces assemblages sont connus de l'homme de l'art et ils ne sont pas décrits ici pour la simplicité de l'exposé, ces procédés et ces dispositifs étant par exemple basés sur les principes du câblage ou du retordage.

En résumé, le fil conforme à l'invention se caractérise par les points suivants :

- bonnes propriétés mécaniques permettant son utilisation dans les carcasses de pneumatiques;
- bonne ductilité permettant sa transformation aisée pour obtenir des assemblages;
- augmentation de la durée de vie des enveloppes où il est incorporé par suite de sa résistance à l'action de l'eau.

Dans les exemples du procédé conforme à l'invention, le fil de départ utilisé comportait un revêtement de nickel et on effectuait un traitement de laitonnage avant de réaliser l'écrouissage, mais d'autres modes de réalisation sont possibles, par exemple en remplaçant le nickel par une autre matière métallique, notamment le cuivre, ou en réalisant l'écrouissage sur un fil de départ dépourvu de revêtement métallique, le fil final pouvant dont être constitué uniquement d'acier inoxydable.

De préférence on a au moins une des caractéristiques suivantes pour le fil conforme à l'invention :

- le diamètre du fil est au moins égal à 0,12 mm et au plus égal à 0,3 mm ;
- la résistance à la rupture en traction est au moins égale à 2400 MPa ;
- la teneur en carbone de l'acier est au moins égale à 0,05 % et au plus égale à 0,15 % en poids ;
- la somme du nickel et du chrome est au moins égale à 22 % et au plus égale à 30 % en poids ;

- la teneur en soufre et la teneur en phosphore sont chacune inférieures à 0,05 % en poids ;
- la ductilité en torsion est au moins égale à 30 tours et plus préférentiellement au moins égale à 50 tours ;
- la structure de l'acier comporte au moins 50 % en volume de martensite et elle est dépourvue d'austénite ou elle en comporte moins de 50 % en volume ;
- la structure de l'acier est pratiquement constituée soit uniquement de martensite, soit uniquement de martensite et d'austénite.

De préférence dans le procédé conforme à l'invention on a au moins une des caractéristiques suivantes :

- le fil de départ a un diamètre au moins égal à 0,4 mm et au plus égal à 2 mm ;
- la teneur en carbone de l'acier est au moins égale à 0,05 % et au plus égale à 0,15 % en poids ;
- la somme des teneurs en nickel et en chrome est au moins égale à 22 % et au plus égale à 30 % en poids ;
- la teneur en soufre et la teneur en phosphore sont chacune inférieures à 0,05 % en poids ;
- le fil de départ est revêtu de nickel ou de cuivre ;
- on effectue un revêtement de laiton avant écrouissage ;
- l'écrouissage est réalisé par tréfilage humide avec une graisse en émulsion dans l'eau ;
- le taux d'écrouissage total ε est au moins égal à 2.

Les assemblages conformes à l'invention décrits dans les exemples étaient tous entièrement constitués de fils en acier inoxydable conformes à l'invention, mais l'invention s'applique aux cas où les assemblages ne sont constitués qu'en partie avec des fils conformes à l'invention. C'est ainsi, par exemple, que les assemblages conformes à l'invention peuvent être des câbles à couches dont une partie seulement des fils sont conformes à l'invention, en particulier lorsque la totalité ou une partie des fils constituant une ou plusieurs couches internes sont conformes à l'invention, la couche externe étant constituée de fils non inoxydables, notamment de fils en aciers connus perlitiques écrouis. Cette réalisation peut avoir l'avantage de réduire les coûts.

Bien entendu, l'invention n'est pas limitée aux exemples de réalisation précédemment décrits, c'est ainsi par exemple que les enveloppes de pneumatiques conformes à l'invention peuvent comporter chacune plusieurs nappes carcasses dont au moins une est constituée au moins en partie par des fils et/ou des assemblages conformes à l'invention.

**Revendications**

1. Fil en acier inoxydable pour enveloppe de pneumatique ayant un diamètre au moins égal à 0,05 mm et au plus égal à 0,5 mm, l'acier du fil comportant au moins 0,02 % en poids et au plus 0,2 % en poids de carbone, au moins 3 % en poids et au plus 20 % en poids de nickel, au moins 12 % en poids et au plus 28 % en poids de chrome, caractérisé en ce qu'il est utilisable dans une carcasse d'enveloppe de pneumatique et en ce qu'il vérifie les points suivants :

   a) sa résistance à la rupture en traction est au moins égale à 2000 MPa ;
   b) la somme du nickel et du chrome dans l'acier est au moins égale à 20 % en poids et au plus égale à 35 % en poids ;
   c) la structure de l'acier comporte au moins 20 % en volume de martensite et elle est dépourvue d'austénite ou elle en comporte moins de 80 % en volume.

2. Fil selon la revendication 1, caractérisé en ce que son diamètre est au moins égal à 0,12 mm et au plus égal à 0,3 mm.

3. Fil selon l'une quelconque des revendications 1 ou 2, caractérisé en ce que sa résistance à la rupture en traction est au moins égale à 2400 MPa.

4. Fil selon l'une quelconque des revendications 1 à 3, caractérisé en ce que l'acier du fil comporte au moins 0,05 % et au plus 0,15 % en poids de carbone.

5. Fil selon l'une quelconque des revendications 1 à 4, caractérisé en ce que dans l'acier du fil la somme du nickel et du chrome est au moins égale à 22 et au plus égale à 30 % en poids.

6. Fil selon l'une quelconque des revendications 1 à 5, caractérisé en ce que la teneur en soufre et la teneur en phosphore sont chacune inférieures à 0,05 % en poids.

7. Fil selon l'une quelconque des revendications 1 à 6, caractérisé en ce qu'il comporte une couche de nickel ou de cuivre.

8. Fil selon l'une quelconque des revendications 1 à 7, caractérisé en ce qu'il comporte une couche extérieure en laiton.

9. Fil selon l'une quelconque des revendications 1 à 8, caractérisé en ce que sa ductilité en torsion est au moins égale à 30 tours, la ductilité en torsion étant le nombre de tours de torsion sur lui-même que le fil peut supporter jusqu'à sa rupture, cette mesure étant réalisée sur une longueur du fil égale à 500 fois son diamètre, une extrémité du fil étant maintenue dans une mâchoire fixe et l'autre extrémité étant maintenue dans une mâchoire rotative que l'on fait tourner de telle sorte que l'axe de rotation soit le même que l'axe du fil, la tension lors de cette torsion étant égale à 5 % de la force de rupture en traction du fil mesurée avant torsion.

10. Fil selon la revendication 9, caractérisé en ce que sa ductilité en torsion est au moins égale à 50 tours.

11. Fil selon l'une quelconque des revendications 1 à 10, caractérisé en ce que la structure de l'acier comporte au moins 50 % en volume de martensite et elle est dépourvue d'austénite ou elle en comporte moins de 50 % en volume.

12. Fil selon l'une quelconque des revendications 1 à 11, caractérisé en ce que la structure de l'acier est pratiquement constituée soit uniquement de martensite, soit uniquement de martensite et d'austénite.

13. Fil selon l'une quelconque des revendications 1 à 12, caractérisé en ce que l'acier a environ la composition suivante (% en poids) : C = 0,096 ; Cr = 17,6 ; Ni = 7,7 ; Mo = 0,7 ; Mn = 1,3 ; Si = 2,0 ; Cu = 0,2 ; N = 0,04 ; S = 0,001 ; P = 0,019 ; le reste étant constitué de fer avec les impuretés inévitables habituelles.

14. Assemblage comportant au moins un fil conforme à l'une quelconque des revendications 1 à 13.

15. Assemblage selon la revendication 14, dont seule une partie des fils sont conformes à l'une quelconque des revendications 1 à 13.

16. Assemblage selon la revendication 15, caractérisé en ce qu'il est un câble à couches dont la totalité ou une partie des fils constituant une ou plusieurs couches internes sont conformes à l'une quelconque des revendications 1 à 13, la couche externe étant constituée de fils non inoxydables.

17. Carcasse pour enveloppe de pneumatique, caractérisée en ce qu'elle comporte au moins un fil conforme à l'une quelconque des revendications 1 à 13 et/ou au moins un assemblage conforme à l'une quelconque des revendications 14 à 16.

18. Enveloppe de pneumatique comportant au moins une carcasse conforme à la revendication 17.

19. Procédé pour préparer le fil conforme à l'une quelconque des revendications 1 à 13, ce procédé étant caractérisé par les points suivants :

a) on part d'un fil en acier inoxydable dont le diamètre est au moins égal à 0,3 mm et au plus égal à 3 mm; l'acier du fil comporte au moins 0,02 % et au plus 0,2 % de carbone, au moins 3 % et au plus 20 % de nickel, au moins 12 % et au plus 28 % de chrome, la somme du nickel et du chrome étant au moins égale à 20 % et au plus égale à 35 %, tous les % étant en poids; la structure de cet acier est entièrement austénitique ou pratiquement austénitique ;
b) on effectue au moins un traitement d'écrouissage, sans traitement thermique, le taux d'écrouissage total ε étant au moins égal à 1,5.

20. Procédé selon la revendication 19, caractérisé en ce que l'on utilise un fil de départ dont le diamètre est au moins égal à 0,4 mm et au plus égal à 2 mm.

21. Procédé selon l'une quelconque des revendications 19 ou 20, caractérisé en ce que l'acier du fil de départ comporte au moins 0,05 % et au plus 0,15 % en poids de carbone.

22. Procédé selon une quelconque des revendications 19 à 21, caractérisé en ce que dans l'acier du fil de départ, la somme du nickel et du chrome est au moins égale à 22 % et au plus égale à 30 % en poids.

23. Procédé selon l'une quelconque des revendications 19 à 22, caractérisé en ce que dans l'acier du fil de départ la teneur en soufre et la teneur en phosphore sont chacune inférieures à 0,05 % en poids.

24. Procédé selon l'une quelconque des revendications 19 à 23, caractérisé en ce que le fil de départ comporte un revêtement de nickel ou de cuivre.

25. Procédé selon l'une quelconque des revendications 19 à 24, caractérisé en ce que l'on effectue un revêtement de laiton sur le fil de départ avant de réaliser l'écrouissage.

26. Procédé selon l'une quelconque des revendications 19 à 25, caractérisé en ce que l'écrouissage est réalisé par tréfilage humide avec une graisse en émulsion dans l'eau.

27. Procédé selon l'une quelconque des revendications 19 à 26, caractérisé en ce que le taux d'écrouissage total ε est au moins égal à 2.

**Patentansprüche**

1. Draht aus nichtrostendem Stahl für Luftreifen, der einen Durchmesser von mindestens 0,05 mm und höchstens 0,5 mm aufweist, wobei der Stahl des Drahtes mindestens 0,02 Gew.-% und höchstens 0,2 Gew.-% Kohlenstoff, mindestens 3 Gew.-% und höchstens 20 Gew.-% Nickel, mindestens 12 Gew.-% und höchstens 28 Gew.-% Chrom enthält, dadurch **gekennzeichnet**, daß der Draht in einer Karkasse eines Luftreifens verwendbar ist und daß er die folgenden Punkte erfüllt:

a) die Reißfestigkeit bei Zugbeanspruchung beträgt mindestens 2000 MPa;
b) die Summe aus Nickel und Chrom im Stahl beträgt mindestens 20 Gew.-% und höchstens 35 Gew.-%;
c) die Struktur des Stahls umfaßt mindestens 20 Vol.-% Martensit und enthält keinen Austenit oder weniger als 80 Vol.-% Austenit.

2. Draht nach Anspruch 1, dadurch gekennzeichnet, daß sein Durchmesser mindestens 0,12 mm und höchstens 0,3 mm beträgt.

3. Draht nach einem der Ansprüche 1 und 2, dadurch gekennzeichnet, daß seine Reißfestigkeit bei Zugbeanspruchung mindestens 2 400 MPa beträgt.

4. Draht nach einem der Ansprüche 1 bis 3, dadurch gekennzeichnet, daß der Stahl des Drahtes mindestens 0,05 Gew.-% und höchstens 0,15 Gew.-% Kohlenstoff enthält.

5. Draht nach einem der Ansprüche 1 bis 4, dadurch gekennzeichnet, daß in dem Stahl des Drahtes die Summe aus Nickel und Chrom mindestens 22 Gew.-% und höchstens 30 Gew.-% beträgt.

6. Draht nach einem der Ansprüche 1 bis 5, dadurch gekennzeichnet, daß der Schwefelgehalt und der Phosphorgehalt jeweils unter 0,05 Gew.-% liegt.

7. Draht nach einem der Ansprüche 1 bis 6, dadurch gekennzeichnet, daß er eine Nickelschicht oder eine Kupferschicht aufweist.

8. Draht nach einem der Ansprüche 1 bis 7, dadurch gekennzeichnet, daß er eine äußere Schicht aus Messing aufweist.

9. Draht nach einem der Ansprüche 1 bis 8, dadurch gekennzeichnet, daß seine Duktilität bei Verdrillung mindestens 30 Umdrehungen entspricht, wobei die Duktilität bei Verdrillung die Zahl der Umdrehungen des Drahtes um sich selbst bedeutet, die mit dem Draht bis zu seinem Brechen durchgeführt werden können, wobei diese Messung mit einem Draht durchgeführt wird, dessen Länge dem 500fachen des Durchmessers entspricht, wobei das eine Ende des Drahtes in einer festen Klemme befestigt ist und das andere Ende in einer drehbaren Klemme befestigt ist, die so gedreht wird, daß die Drehachse mit der Achse des Drahtes übereinstimmt, wobei die Spannung bei dieser Verdrillung 5 % der Reißkraft bei Zugbeanspruchung des untersuchten Drahtes vor der Verdrillung entspricht.

10. Draht nach Anspruch 9, dadurch gekennzeichnet, daß seine Duktilität bei Verdrillung mindestens 50 Umdrehungen entspricht.

11. Draht nach einem der Ansprüche 1 bis 10, dadurch gekennzeichnet, daß die Struktur des Stahls mindestens 50 Vol.-% Martensit und keinen Austenit oder höchstens 50 Vol.-% Austenit enthält.

12. Draht nach einem der Ansprüche 1 bis 11, dadurch gekennzeichnet, daß die Struktur des Stahls nahezu vollständig aus Martensit oder nahezu vollständig aus Martensit und Austenit besteht.

13. Draht nach einem der Ansprüche 1 bis 12, dadurch gekennzeichnet, daß der Stahl etwa die folgende Zusammensetzung (Gew.-%) aufweist: C = 0,096; Cr = 17,6; Ni = 7,7; Mo = 0,7; Mn = 1,3; Si = 2,0; Cu = 0,2; N = 0,04; S = 0,001; P = 0,019; wobei der Rest aus Eisen mit den üblichen unvermeidbaren Verunreinigungen besteht.

14. Zusammenfügung, die mindestens einen Draht nach einem der Ansprüche 1 bis 13 enthält.

15. Zusammenfügung nach Anspruch 14, in der nur ein Teil der Drähte erfindungsgemäße Drähte nach einem der Ansprüche 1 bis 13 sind.

16. Zusammenfügung nach Anspruch 15, dadurch gekennzeichnet, daß es sich um Lagenkabel handelt, bei dem alle oder ein Teil der Drähte, die eine oder mehrere innere Schichten bilden, Drähte nach einem der Ansprüche 1 bis 13 sind, wobei die äußere Schicht aus nicht nichtrostenden Drähten besteht.

17. Karkasse für einen Luftreifen, dadurch gekennzeichnet, daß sie mindestens einen Draht nach einem der Ansprüche 1 bis 13 und/oder mindestens eine Zusammenfügung nach einem der Ansprüche 14 bis 16 enthält.

18. Luftreifen, der mindestens eine Karkasse nach Anspruch 17 enthält.

19. Verfahren zur Herstellung des Drahtes nach einem der Ansprüche 1 bis 13, das durch die folgenden Punkte gekennzeichnet ist:

a) es wird von einem Draht aus nichtrostendem Stahl ausgegangen, der einen Durchmesser von mindestens 0,3 mm und höchstens 3 mm aufweist, wobei der Stahl, aus dem der Draht besteht, mindestens 0,02 % und höchstens 0,2 % Kohlenstoff, mindestens 3 % und höchstens 20 % Nickel, mindestens 12 % und höchstens 28 % Chrom enthält, wobei die Summe aus Nickel und Chrom mindestens 20 % und höchstens 35 % beträgt, worin alle Prozentangaben gewichtsbezogen sind, wobei die Struktur dieses Stahls vollständig oder praktisch vollständig austenitisch ist,

b) es wird mindestens eine Kaltverformungsbehandlung ohne Wärmebehandlung durchgeführt, wobei das insgesamt erzielte Kaltverformungsverhältnis mindestens 1,5 beträgt.

20. Verfahren nach Anspruch 19, dadurch gekennzeichnet, daß ein Ausgangsdraht verwendet wird, dessen Durchmesser mindestens 0,4 mm und höchstens 2 mm beträgt.

21. Verfahren nach einem der Ansprüche 19 und 20, dadurch gekennzeichnet, daß der Stahl des Ausgangsdrahtes mindestens 0,05 Gew.-% und höchstens 0,15 Gew.-% Kohlenstoff enthält.

22. Verfahren nach einem der Ansprüche 19 bis 21, dadurch gekennzeichnet, daß in dem Stahl des Ausgangsdrahtes die Summe aus Nickel und Chrom mindestens 22 Gew.-% und höchstens 30 Gew.-% beträgt.

23. Verfahren nach einem der Ansprüche 19 bis 22, dadurch gekennzeichnet, daß in dem Stahl des Ausgangsdrahtes der Schwefelgehalt und der Phosphorgehalt jeweils unter 0,05 Gew.-% liegt.

24. Verfahren nach einem der Ansprüche 19 bis 23, dadurch gekennzeichnet, daß der Ausgangsdraht einen Nickelüberzug oder einen Kupferüberzug aufweist.

25. Verfahren nach einem der Ansprüche 19 bis 24, dadurch gekennzeichnet, daß auf den Ausgangsdraht vor der Durchführung der Kaltverformung ein Messingüberzug aufgebracht wird.

26. Verfahren nach einem der Ansprüche 19 bis 25, dadurch gekennzeichnet, daß die Kaltverformung durch Naßziehen mit einem in Wasser emulgierten Fett durchgeführt wird.

27. Verfahren nach einem der Ansprüche 19 bis 26, dadurch gekennzeichnet, daß der insgesamt erzielte Kaltverformungsgrad $\varepsilon$ mindestens gleich 2 ist.

**Claims**

1. A stainless steel wire for tyres, having a diameter of at least 0.05 mm and at most 0.5 mm, the steel of the wire comprising at least 0.02% by weight and at most 0.2% by weight of carbon, at least 3% by weight and at most 20% by weight of nickel, at least 12% by weight and at most 28% by weight of chromium, characterised in that it can be used in a tyre carcass and that it has the following features:

a) its tensile strength is at least 2000 MPa;
b) the total of the nickel and the chromium in the steel is at least 20% by weight and at most 35% by weight;
c) the structure of the steel comprises at least 20% by volume of martensite and it is devoid of austenite or comprises less than 80% by volume thereof.

2. A wire according to Claim 1, characterised in that its diameter is at least 0.12 mm and at most 0.3 mm.

3. A wire according to any one of Claims 1 or 2, characterised in that its tensile strength is at least 2400 MPa.

4. A wire according to any one of Claims 1 to 3, characterised in that the steel of the wire comprises at least 0.05% and at most 0.15% by weight of carbon.

5. A wire according to any one of Claims 1 to 4, characterised in that in the steel of the wire the total of the nickel and the chromium is at least 22 and at most 30% by weight.

6. A wire according to any one of Claims 1 to 5, characterised in that the sulphur content and the phosphorus content are each less than 0.05% by weight.

7. A wire according to any one of Claims 1 to 6, characterised in that it comprises a layer of nickel or copper.

8. A wire according to any one of Claims 1 to 7, characterised in that it comprises an outer layer of brass.

9. A wire according to any one of Claims 1 to 8, characterised in that its ductility in torsion is at least 30 twist turns, the ductility in torsion being the number of twist turns on itself that the wire can withstand until it breaks, this measurement being effected on a length of wire equal to 500 times its diameter, one end of the wire being held in a fixed jaw, and the other end being held in a rotary jaw, which is turned such that the axis of rotation is the same as the axis of the wire, the tension upon this torsion being equal to 5% of the breaking load of the wire measured before torsion.

10. A wire according to Claim 9, characterised in that its ductility in torsion is at least 50 turns.

11. A wire according to any one of Claims 1 to 10, characterised in that the structure of the steel comprises at least 50% by volume of martensite and it is devoid of austenite or comprises less than 50% by volume thereof.

12. A wire according to any one of Claims 1 to 11, characterised in that the structure of the steel is practically constituted either solely of martensite or solely of martensite and austenite.

13. A wire according to any one of Claims 1 to 12, characterised in that the steel has approximately the following composition (percentages by weight): C = 0.096; Cr = 17.6; Ni = 7.7; Mo = 0.7; Mn = 1.3; Si = 2.0; Cu = 0.2; N = 0.04; S = 0.001; P = 0.019; the remainder consisting of iron with the usual unavoidable impurities.

14. An assembly comprising at least one wire in accordance with any one of Claims 1 to 13.

15. An assembly according to Claim 14, only a part of the wires of which are in accordance with any one of Claims 1 to 13.

16. An assembly according to Claim 15, characterised in that it is a layer cable, all or part of the wires of which which form one or more internal layers are in accordance with any one of Claims 1 to 13, the outer layer being formed of non-stainless wires.

17. A carcass for a tyre, characterised in that it comprises at least one wire according to any one of Claims 1 to 13 and/or at least one assembly in accordance with any one of Claims 14 to 16.

18. A tyre comprising at least one carcass in accordance with Claim 17.

19. A process for preparing the wire in accordance with any one of Claims 1 to 13, this process being characterised by the following features:

a) the starting point is a stainless steel wire having a diameter of at least 0.3 mm and at most 3 mm; the steel of the wire comprises at least 0.02% and at most 0.2% of carbon, at least 3% and at most 20% of nickel, at least 12% and at most 28% of chromium, the total of the nickel and the chromium being at least 20% and at most 35%, all these percentages being % by weight; the structure of this steel is completely austenitic or practically austenitic;

b) at least one work hardening treatment is effected, without heat treatment, the total work hardening ratio ε being at least 1.5.

20. A process according to Claim 19, characterised in that an initial wire is used which has a diameter of at least 0.4 mm and at most 2 mm.

21. A process according to any one of Claims 19 or 20, characterised in that the steel of the initial wire comprises at least 0.05% and at most 0.15% by weight of carbon.

22. A process according to any one of Claims 19 to 21, characterised in that in the steel of the initial wire the total of the nickel and the chromium is at least 22% and at most 30% by weight.

23. A process according to any one of Claims 19 to 22, characterised in that in the steel of the initial wire the sulphur content and the phosphorus content are each less than 0.05% by weight.

24. A process according to any one of Claims 19 to 23, characterised in that the initial wire comprises a coating of nickel or copper.

25. A process according to any one of Claims 19 to 24, characterised in that a brass coating is effected on the initial wire before effecting work hardening.

26. A process according to any one of Claims 19 to 25, characterised in that the work hardening is effected by wet drawing with a grease in an emulsion in water.

27. A process according to any one of Claims 19 to 26, characterised in that the total work hardening ratio ε is at least 2.